# EUROPÄISCHE PATENTSCHRIFT

(11) **EP 3 191 816 B1**
(45) Veröffentlichungstag und Bekanntmachung des Hinweises auf die Patenterteilung: **07.11.2018**
(21) Anmeldenummer: 15777613.9
(22) Anmeldetag: 10.09.2015
(51) Int. Cl.: G01N 21/71, B07C 5/342

(54) **VERFAHREN UND VORRICHTUNG ZUR SORTIERUNG VON WIEDERVERWERTBAREN ROHSTOFFSTÜCKEN**
PROCESS AND APPARATUS FOR SORTING REUSABLE PIECES OF RAW MATERIAL
PROCÉDÉ ET DISPOSITIF POUR LE TRI DE MORCEAUX DE MATIÈRES PREMIÈRES RECYCLABLES

(30) Priorität: 11.09.2014 DE 102014013160
(43) Veröffentlichungstag der Anmeldung: 19.07.2017
(73) Patentinhaber: Clean Lasersysteme GmbH, 52134 Herzogenrath (DE)
(72) Erfinder: BÜCHTER, Edwin, 52134 Herzogenrath (DE); BARKHAUSEN, Winfried, 52074 Aachen (DE); PILLKAHN, Hans-Bernd, 58791 Werdohl (DE)
(74) Vertreter: Müller & Schubert
(86) Internationale Anmeldenummer: PCT/EP2015/070746
(87) Internationale Veröffentlichungsnummer: WO 2016/038153

(56) Entgegenhaltungen:
- WO-A1-2015/077867
- DE-A1- 4 426 475
- DE-B3- 10 361 727
- US-A- 5 042 947
- US-A1- 2003 016 353

## Beschreibung

Die Erfindung betrifft ein Verfahren zur Sortierung von wiederverwertbaren Rohstoffstücken, die durch eine Transporteinrichtung fortlaufend in Förderrichtung bewegt werden, wobei eine Analyse der chemischen Zusammensetzung der Rohstoffstücke mit Hilfe der laserinduzierten Plasmaspektroskopie (LIBS) erfolgt und in Abhängigkeit von der ermittelten Zusammensetzung eine automatisierte Sortierung der Rohstoffstücke durchgeführt wird, wobei die Rohstoffstücke in einem ersten Schritt mit mehreren ersten Laserpulsen beaufschlagt werden, um Oberflächenbeschichtungen und Verunreinigungen von den Rohstoffstücken zu entfernen, und in einem zweiten Schritt ein oder mehrere weitere Laserpulse auf die Stellen der Rohstoffstücke gerichtet werden, an denen die Oberflächenbeschichtungen und/oder Verunreinigungen entfernt worden sind, wobei freigelegtes Material der Rohstoffstücke durch die zweiten Laserpulse in ein Plasma überführt und für die ersten und zweiten Laserpulse derselbe Laser verwendet wird. Des Weiteren betrifft die Erfindung eine Vorrichtung zur Durchführung des Verfahrens.

In Zeiten knapper und teurer werdender Ressourcen ist die Wiederverwertung von Sekundärrohstoffen, beispielsweise in Form des Schrottrecyclings, von erheblicher wirtschaftlicher Bedeutung. Dies gilt umso mehr, als große Teile der verwendeten Rohstoffe aus Drittländern stammen, die die Versorgungssicherheit nicht immer gewährleisten können. Schließlich ist die Wiederverwertung von Sekundärrohstoffen auch in ökologischer Hinsicht wünschenswert.

Die Sekundärrohstoffe liegen in der Regel als Fraktionen vor, die aus einer Vielzahl an einzelnen Rohstoffstücken bestehen. Zumeist entstammen die einzelnen Fraktionen nicht einer einzelnen Entfallstelle (Entstehungsort), sondern setzen sich aus Rohstoffen unterschiedlicher Herkunft zusammen. Selbst der Entfall aus einer bestimmten Entfallstelle kann wiederum unterschiedliche chemische Zusammensetzungen bei den Einzelstücken aufweisen. Insgesamt sind somit die einzelnen Fraktionen meist nur hinsichtlich unterschiedlicher Rohstoffkategorien wie Zugehörigkeit zu einem Basiswerkstoff und der Abmessung vorsortiert, unterscheiden sich aber in ihrer chemischen Zusammensetzung oft beträchtlich. Beispielsweise setzen sich Metallschrotte aus einzelnen Teilen unterschiedlicher Legierungsgehalte zusammen.

Für die Erzeugung von Hochleistungswerkstoffen aus Sekundärrohstoffen ist dabei die exakte chemische Zusammensetzung der Zielschmelze im Falle von metallischen Werkstoffen von höchster Bedeutung. Eine bloße Vorsortierung nach einzelnen Schrottgruppen mag für die Gattierung, d.h. den Schmelzofenbesatz, für einfachere Commodity-Werkstoffe noch hinreichend sein, nicht jedoch für die Herstellung von Hochleistungswerkstoffen (High Performance Alloys = HPA), die besondere physikalische Eigenschaften im Hinblick auf Festigkeit, Verschleiß- und Korrosionsverhalten, Hitzebeständigkeit, Leitfähigkeit etc. aufweisen. Darüber hinaus werden bislang störende Legierungselemente noch in großem Umfang verschlackt und damit letztlich vernichtet, was langfristig weder ökonomisch noch ökologisch hinnehmbar ist.

Da die Anforderungen an Werkstoffe, die durch Makro- und Mikrolegieren eingestellt werden, immer höher werden, werden ständig neue Legierungen mit immer feiner aufeinander abgestimmten Legierungsanteilen erzeugt. Diese Legierungsbestandteile können sich jedoch bei der späteren Wiederverwertung störend bemerkbar machen, insbesondere wenn die Wiederverwertung durch Einschmelzen in Induktionsöfen erfolgt, die keine metallurgische Aufarbeitung ermöglichen. So stören beispielsweise Mikrolegierungselemente, die hochfeste Stahlblechwerkstoffe ausmachen, die Einformung von kugeligem Graphit in ferritischem Grundgefüge bei Hochleistungseisenguss.

Es werden deshalb meist nur Anteile an vorsortierten Sekundärrohstoffen aus dem Beschaffungsmarkt für die Zielschmelze eingesetzt. Diese werden mit Primärrohstoffen bekannter Zusammensetzung dann so verschnitten, dass maximal zugelassene Legierungsgehalte eingestellt und insbesondere störende Legierungsbestandteile unter eine vorgegebene Spezifikationsgrenze gedrückt werden. Im Sinne einer funktionierenden Kreislaufwirtschaft wäre aber die Erhöhung des Sekundärrohstoffanteils wünschenswert.

Hierzu müssen die Sekundärrohstoffstücke hinsichtlich ihrer Zusammensetzung möglichst genau sortiert werden. Die Sortierung bedarf einer vorherigen Analyse der chemischen Zusammensetzung, die sich beispielsweise mit Hilfe der laserinduzierten Atomemissionsspektroskopie (laserinduzierte Plasmaspektroskopie; LIBS = laser induced breakdown spectroscopy) erreichen lässt. Eine geringe Menge der zu analysierenden Materialoberfläche wird hierbei verdampft und in ein Plasma überführt. Das daraufhin vom Plasma emittierte Licht ist charakteristisch für die atomare Zusammensetzung. Allerdings wird beim LIBS-Verfahren letztlich nur die Oberfläche des Feststoffs analysiert; die Analyse wird daher durch Oberflächenbeschichtungen oder Verunreinigungen auf der Oberfläche beeinflusst, sodass das Messergebnis nicht repräsentativ ist für die Gesamtzusammensetzung des analysierten Rohstoffstücks.

Um dieses Problem zu lösen, schlägt beispielsweise die DE 44 26 475 A1 vor, zunächst einen gepulsten Laserstrahl auf die Oberflächenschicht zu richten, um diese zumindest teilweise zu entfernen, und in einer zweiten Phase das freigelegte Material durch weitere Laserpulse mittels LIBS zu analysieren. Zusätzlich sollen sich während der Analyse fortbewegende Rohstoffstücke analysiert werden, indem ein optisches Führungssystem den Laserstrahl bewegungssynchron auf dem Messpunkt des bewegten Objekts mitführt, so dass die Laserpulse zur Ablösung der Oberflächenbeschichtung und zur Analyse der Zusammensetzung auf dieselbe Stelle des Rohstoffstücks appliziert werden. Dies hat zudem den Vorteil, dass auf einen zweiten Laser verzichtet werden kann, was die Kosten der Gesamtvorrichtung deutlich reduziert.

Als problematisch hat sich in diesem Zusammenhang herausgestellt, dass Verfälschungen entstehen können, wenn im Randbereich der freigelegten Oberfläche eine LIBS-Analyse durchgeführt wird. Insbesondere bei verhältnismäßig dicken Beschichtungen bildet sich an der Oberfläche eine Art Krater aus, wobei der Kraterrand auch nach Einwirkung der Laserpulse zur Ablösung der Oberfläche Elemente der Beschichtung oder Verunreinigungen aufweist. Wenn der für die LIBS-Analyse vorgesehene Laserstrahl diesen Kraterrand erfasst, stimmt das Messergebnis nicht mit der tatsächlichen Zusammensetzung der Rohstoffstücke überein und es wird u. U. eine falsche Zuordnung vorgenommen. Auch das für die LIBS-Analyse erzeugte Plasma kann durch die Kratergeometrie beeinflusst werden.
Zur Lösung dieses Problems hat die DE 103 61 727 B3 bereits vorgeschlagen, den Abstand des Durchstoßpunktes der Laserstrahlachse durch die Probenoberfläche vom Schnittpunkt der Fokusebene mit der Laserstrahlachse bei der Ablösung der Beschichtung sukzessive zu verkleinern und für den eigentlichen Analyseschritt einen deutlich kleineren Strahldurchmesser zu verwenden. Auf diese Weise wird sichergestellt, dass die Analysepulse nur die Oberfläche der freigelegten Bereiche erfassen, nicht aber Störungen etwa im Bereich des Kraterrandes erfahren.
Nachteilig macht sich jedoch bemerkbar, dass die Variation des Fokusdurchmessers eine verhältnismäßig komplexe Regelung des Lasers erfordert. Darüber hinaus bewirkt ein großer Fokusdurchmesser eine schlechte Ablösung von Oberflächenschichten und eine niedrige Laserpulsrepetitionsrate, sodass die Ablösung insgesamt verlangsamt wird. Entsprechend läuft auch der Gesamtprozess langsamer ab, was jedoch angesichts hoher Durchsatzraten an zu sortierenden Rohstoffstücken unerwünscht ist.

US2003/0016353 bietet eine andere Lösung, wobei eine Blende unterschiedlicher Größe in den Laserstrahlengang eingebracht wird. Während zunächst eine Blende mit vergleichsweise größer Öffnung für die Ablationspulse eingesetzt wird, wird für die Analyse eine Blende mit deutlich kleinerer Öffnung in den Strahlengang gebracht. Es stellt sich somit die Aufgabe, ein Verfahren zur Sortierung von wiederverwertbaren Rohstoffstücken der eingangs genannten Art zur Verfügung zu stellen, das lediglich einen Laser benötigt, Oberflächenbeschichtungen und Verunreinigungen effektiv entfernt und eine Analyse der Zusammensetzung der Rohstoffstücke durchführt, ohne dass letztere durch die abgelösten Oberflächenbeschichtungen/Verunreinigungen verfälscht wird.

Diese Aufgabe wird erfindungsgemäß gelöst durch Verfahren zur Sortierung von wiederverwertbaren Rohstoffstücken, die durch eine Transporteinrichtung fortlaufend in Förderrichtung bewegt werden, wobei eine Analyse der chemischen Zusammensetzung der Rohstoffstücke mit Hilfe der laserinduzierten Plasmaspektroskopie (LIBS) erfolgt und in Abhängigkeit von der ermittelten Zusammensetzung eine automatisierte Sortierung der Rohstoffstücke durchgeführt wird, wobei die Rohstoffstücke
- in einem ersten Schritt mit mehreren ersten Laserpulsen beaufschlagt werden, um Oberflächenbeschichtungen und/oder Verunreinigungen von den Rohstoffstücken zu entfernen, und
- in einem zweiten Schritt ein oder mehrere zweite Laserpulse auf die Stellen der Rohstoffstücke gerichtet werden, an denen die Oberflächenbeschichtungen und/oder Verunreinigungen entfernt worden sind, wobei freigelegtes Material der Rohstoffstücke durch die zweiten Laserpulse in ein Plasma überführt wird,
wobei für die ersten und zweiten Laserpulse derselbe Laser verwendet wird und wobei die ersten Laserpulse über die Rohstoffstücke wandern und wiederholt erste Laserpulse auf nah benachbarte Stellen der Rohstoffstücke einwirken und die Fläche der Rohstoffstücke, über die die ersten Laserpulse bewegt und die von Oberflächenbeschichtungen und/oder Verunreinigungen befreit werden, größer ist als die von den zweiten Laserpulsen erfasste Fläche der Rohstoffstücke, wobei der Fokusdurchmesser und der Fokuspunkt des Laserstrahls zwischen den ersten und zweiten Laserpulsen konstant gehalten werden.
Erfindungsgemäß wird durch die ersten Laserpulse (Reinigungspulse) eine Fläche auf den zu analysierenden Rohstoffstücken freigelegt, die deutlich größer ist als die Fläche, die eine Beaufschlagung durch die zweiten Laserpulse (Analysepulse) erfährt. Auf diese Weise wird wirkungsvoll verhindert, dass die Analysepulse den Kraterrand erfassen und eine Verfälschung des Ergebnisses bewirken. Dabei sollte gewährleistet sein, dass sich die ersten Laserpulse so überlappen, dass keine Kraterwände auf der gereinigten Oberfläche entstehen und diese eine einstellbare Oberflächenfeinstruktur erhält. Darüber hinaus wird sichergestellt, dass selbst bei Oberflächenschichten mit besonders hoher Stärke von beispielsweise mehreren zehn bis mehreren hundert Mikrometern genügend Laserlicht die freigelegte Oberfläche erreicht und von der Oberfläche zum Detektor störungsfrei zurückgeworfen wird. Die Begriffe erste Laserpulse und Reinigungspulse bzw. zweite Laserpulse und Analysepulse werden im Folgenden synonym verwendet. In der Regel handelt es sich sowohl bei den Reinigungs- als auch bei den Analysepulsen um Folgen von Laserpulsen. Als Fokusdurchmesser wird der Durchmesser des Laserstrahls im Fokuspunkt, d. h. seiner dünnsten Stelle (Strahltaille) verstanden.

Im Gegensatz zur DE 103 61 727 B3, bei der der Fokusdurchmesser ständig variiert wird, wird dieser erfindungsgemäß konstant gehalten; stattdessen wirken jedoch wiederholt Reinigungspulse auf nah benachbarte Stellen der Rohstoffstücke ein, sodass insgesamt ein vergleichsweise großer Bereich freigelegt wird. Die Reinigungspulse "wandern" somit über die Rohstoffstücke, bis ein ausreichend großer Bereich hinreichend gereinigt zur Analyse zur Verfügung steht. Insgesamt sollte die Fläche der Rohstoffstücke, die von Oberflächenbeschichtungen und/oder Verunreinigungen befreit wird, mindestens so groß sein wie die von den Analysepulsen erfasste Fläche der Rohstoffstücke, zuzüglich einer Flächenvergrößerung. Diese Flächenvergrößerung sollte so gewählt werden, dass mindestens ein Fokusdurchmesser und die Positionstoleranzen bei der Laserstrahlpositionierung abgedeckt werden. Bevorzugt ist es, wenn die Fläche der Rohstoffstücke, die von Oberflächenbeschichtungen und/oder Verunreinigungen befreit wird, mindestens viermal, bevorzugt mindestens sechsmal so groß ist wie die von den Analysepulsen erfasste Fläche der Rohstoffstücke.

Je nach Beschaffenheit und Dicke der Oberflächenbeschichtungen kann es notwendig sein, die freizulegenden Bereiche der Rohstoffstücke mehrfach mit Reinigungspulsen zu beaufschlagen. Auf diese Weise wird sichergestellt, dass anschließend eine unverfälschte Analyse der Zusammensetzung möglich ist. Ggf. kann eine mehrfache Beaufschlagung vom Benutzer vorgewählt werden; denkbar ist jedoch auch, dass die Vorrichtung zur Durchführung des erfindungsgemäßen Verfahrens selbstlernend erkennt, ob eine weitere Ablösung von Oberflächenbeschichtungen/Verunreinigungen notwendig ist. Dies kann beispielsweise dadurch erreicht werden, dass man Reinigungspulse so lange auf die Oberfläche einwirken lässt, bis die anschließend aufgebrachten Analysepulse ein konstantes Ergebnis liefern. In diesem Fall erkennt die Vorrichtung bei mehrfachem Wechsel zwischen ersten und zweiten Laserpulsen (Reinigungs- und Analysepulsen) bei sehr schneller Pulsfrequenz und daher nah beieinanderliegenden Messpunkten entlang eines Rohstoffstücks dessen Oberflächenbeschaffen heit.

Vorteilhafterweise werden die erste Laserpulse (Reinigungspulse) entlang zumindest zwei Dimensionen über die von Oberflächenbeschichtungen/Verunreinigungen zu befreienden Flächen der Rohstoffstücke geführt, d.h. die Beaufschlagung erfolgt nicht nur punktuell oder entlang einer Linie, sondern beispielsweise in Längen- (x-) und in Breiten- (y-) Richtung. Entsprechend wird in keiner Dimension die Messung mit Hilfe der Analysepulse verfälscht.

Durch den Wechsel zwischen Reinigungs- und Analysepulsen (ersten und zweiten Laserpulsen) wird erreicht, dass ein einzelner Laser äußerst effektiv eingesetzt werden kann, und zwar auch dann, wenn die Rohstoffstücke mit großer Geschwindigkeit bewegt werden. Zur Beschleunigung des Verfahrens trägt insbesondere bei, dass der Fokusdurchmesser des Laserstrahls konstant gehalten wird, sodass zum einen keine aufwändige Regelung zwischen Reinigungs- und Analysepulsen notwendig ist und zum anderen aufgrund des geringen Fokusdurchmessers auch bei den Reinigungspulsen eine effektive Ablösung von Beschichtungen und Verunreinigungen erfolgt. Der Fokusdurchmesser des Laserstrahls beträgt dabei einige 10 µm bis einige 100 µm, vorzugsweise 60 bis 140 µm.

Die nach Überführung eines Teils des Materials der Rohstoffstücke in ein Plasma von diesem ausgehende Emission wird zu einem Spektrometer geleitet, typischerweise über Lichtleitfasern. Dabei kann die Spektralemission ganz oder teilweise den optischen Weg der Laseremissionseinrichtung nutzen und durch wellenlängenselektive Spiegel oder optische Elemente an geeigneter Stelle aus dem optischen Strahlengang der Lasereinrichtung ausgekoppelt und dem Spektrometer zugeführt werden. Durch das Spektrometer erfolgt sodann eine Auswertung der atomaren Zusammensetzung. In Abhängigkeit von der Zusammensetzung erfolgt anschließend die Sortierung des Rohstoffstücks zu einer Zielfraktion oder auch die Aussortierung, falls sich das Rohstoffstück als nicht analysierbar oder nicht verwertbar erweist. Für jede Zielfraktion werden bestimmte Vorgaben hinsichtlich Ober- und Untergrenzen einzelner Bestandteile gemacht, sodass die Steuereinheit des Systems jeweils eine Entscheidung darüber treffen kann, ob ein Rohstoffstück einer bestimmten Zielfraktion oder aber einer anderen Zielfraktion zugeordnet werden muss.

Sinnvollerweise sorgt die Steuereinheit für die bewegungssynchrone Mitführung des Laserstrahls entsprechend der Bewegung der Rohstoffstücke, wie dies u. a. aus der DE 44 26 475 A1 bekannt ist. Hierzu können insbesondere verstellbare Umlenkspiegel eingesetzt werden. Die Steuereinheit berücksichtigt dabei insbesondere die Bewegung der Rohstoffstücke durch die Transporteinrichtung und kompensiert den Vorschub der Bewegung während der Bearbeitung durch die Lasereinrichtung.

Als geeignet herausgestellt haben sich Laserpulsdauern sowohl für die Reinigungspulse als auch für die Analysepulse im Bereich von bis zu mehreren 100 ns, insbesondere im Bereich von 20 bis 200 ns, bevorzugt im Bereich von 60 bis 120 ns. Auf diese Weise sind die Laserpulse für die unterschiedlichen Ziele, nämlich Materialabtrag einerseits und Emissionsspektroskopie andererseits geeignet.

Denkbar ist allerdings grundsätzlich auch, dass die Laserpulsdauern für die Reinigungspulse länger eingestellt werden als für die Analysepulse, beispielsweise für die Reinigungspulse im Bereich einiger Mikrosekunden, für die Analysepulse im Bereich einiger Nanosekunden. Dies lässt sich durch eine geeignete Steuerung des Lasers mit Hilfe einer Güteschaltung bzw. mehrfacher Güteschaltung (Q-Switch) erreichen. Die Pulsenergie zwischen den ersten und zweiten Laserpulsen kann ebenfalls variiert werden, um für die Reinigungspulse eine höhere Laserenergie einzusetzen als für die Analysepulse. Bevorzugt ist jedoch, wie zuvor beschrieben, Pulsdauer und Energie zwischen ersten und zweiten Laserpulsen konstant zu halten.

Bei dem durch die zweiten Laserpulse erzeugten Plasma handelt es sich vorzugsweise um ein thermisches Plasma. Ein solches kann mit Hilfe von Festkörperlasern oder Faserlasern erzeugt werden. Pro Laserpuls zeigt ein solcher Laser Eindringtiefen von einigen µm, wodurch etwaige Oberflächeneffekte zurückgedrängt werden.

Die Pulsfrequenz der Analysepulse und bevorzugt auch der Reinigungspulse ist typischerweise größer als 10 kHz und liegt bevorzugt zwischen 20 und mehreren 100 kHz. Diese Pulsfrequenzen haben sich für die Analyse der Zusammensetzung und auch für die Reinigung als besonders effektiv herausgestellt.

Die Rohstoffstücke werden zweckmäßigerweise mit hoher Geschwindigkeit bewegt, wobei insbesondere ein Förderband zum Einsatz kommen kann. Auf diese Weise kann eine entsprechend hohe Durchsatzrate sichergestellt werden, die für die Sortierung von großen Mengen an Schrott oder anderem Sekundärrohstoff notwendig ist. Als geeignet für das erfindungsgemäße Verfahren haben sich neben der statischen Bearbeitung auch Fördergeschwindigkeiten der Rohstoffstücke von > 0,1 m/s, bevorzugt > 2 m/s und insbesondere von > 3 m/s herausgestellt. Erfindungsgemäß sollte eine Analyse der Zusammensetzung zumindest eines Großteils der Rohstoffstücke und idealerweise jedes einzelnen Stücks durchgeführt werden, so dass selbst bei Vermischung von Fraktionen unterschiedlicher Herkunft eine genaue Sortierung erfolgen kann.

Bei den Rohstoffstücken handelt es sich normalerweise vorrangig um Sekundärrohstoffstücke, d. h. Rohstoffstücke zur Wiederverwendung. Es können jedoch, insbesondere zur Herbeiführung einer bestimmten Zielzusammensetzung im Bedarfsfall auch nur oder vorwiegend Primärrohstoffstücke hinzugefügt werden. In der Regel handelt es sich um einschmelzbare Rohstoffe; idealerweise müssen diese nur noch eingeschmolzen werden, um eine Zielschmelze der gewünschten Zusammensetzung zu erhalten, sodass eine Beimischung weiterer Stoffe oder eine Entfernung von Stoffen aus der Schmelze nicht mehr oder allenfalls noch in sehr geringem Umfang notwendig ist, um einen neuen Werkstoff zu erzeugen.

Insbesondere kann es sich bei den Rohstoffstücken um Metallschrotte, besonders Stahlschrotte handeln, da diese mengenmäßig einen erheblichen Teil der wiederverwertbaren Rohstoffe ausmachen. Grundsätzlich ist das erfindungsgemäße Verfahren jedoch auch für andere Metallschrotte einsetzbar, zu nennen sind insbesondere Aluminium-, Kupfer-, Zink- und Titanschrotte. Besonders zweckmäßig ist das Verfahren bei der Sortierung von verzinkten Stahlschrottstücken, da diese eine vergleichsweise dicke Oberflächenbeschichtung aufweisen, die eine unmittelbare Analyse der Zusammensetzung unterhalb der Oberflächenbeschichtung unmöglich macht. Denkbar ist aber auch der Einsatz beim Recycling von Kunststoffteilen oder Glas. Mithilfe des erfindungsgemäßen Verfahrens, das Reinigungspulse und Analysepulse miteinander kombiniert, kann jedoch auch in diesem Fall eine zielgerichtete Analyse und Sortierung der Stahlschrottstücke erfolgen, ohne dass die Verzinkung zu einer Verfälschung der Ergebnisse führt.

Hilfreich ist es, wenn die Rohstoffstücke hinsichtlich ihrer Grundzusammensetzung, beispielsweise hinsichtlich des Basismaterials oder des Schichtsystems vorsortiert sind. Bei bekannter Grundzusammensetzung kann entschieden werden, ob eine Behandlung der Rohstoffstücke mit einer oder mehreren Flüssigkeiten zur Reinigung der Oberfläche und/oder zur Ablösung von Oberflächenbeschichtungen, d. h. ein Abbeizen notwendig ist, bevor das eigentliche erfindungsgemäße Verfahren durchgeführt wird. Hier können unterschiedliche Vorgehensweisen sinnvoll sein, je nachdem, ob es sich z. B. um verzinkten, emaillierten oder mit einer Kunststoffbeschichtung versehenen Schrott oder um Kunststoffreste handelt. Beispielsweise können als Abbeizmittel zur Entfernung von organischen Beschichtungen organische Lösungsmittel wie aliphatische oder aromatische Kohlenwasserstoffe, Chlorkohlenwasserstoffe, Alkohole, Glykolether, Dicarbonsäureester, Aceton usw. verwendet werden. Besonders häufig verwendet wird Methylenchlorid. Zur Entfernung einer Zinkschicht können Säuren oder Basen eingesetzt werden. Entsprechende Verfahren sind dem Fachmann bekannt. Besonders effektiv ist eine Behandlung mit Flüssigkeiten zur Reinigung der Oberfläche in einem Schwingförderer, wie es Gegenstand der WO 2012/110239 A1 ist. Zur weiteren Erhöhung der Effizienz können die zu behandelnden Rohstoffstücke zweckmäßigerweise vor Inkontaktbringen mit der Flüssigkeit mechanisch vorbehandelt, insbesondere zerkleinert, zerschreddert, aufgeraut und/oder in anderer Weise deformiert werden, um die Kontaktflächen zur Flüssigkeit zu vergrößern. Ggf. kann vor der Analyse noch eine Trocknung der mit der Flüssigkeit behandelten Stücke durchgeführt werden, um anhaftende Flüssigkeitsreste zu entfernen.

Gemäß einer weiteren Variante werden die ersten Laserpulse auf Rohstoffstücke gerichtet, die in Förderrichtung weiter zurückliegen, und die zweiten Laserpulse auf Rohstoffstücke, die in Förderrichtung weiter fortgeschritten sind, wobei ein fortlaufender Wechsel zwischen der Bestrahlung von in Förderrichtung weiter zurückliegenden Rohstoffstücken mit ersten Laserpulsen und in Förderrichtung weiter fortgeschrittenen Rohstoffstücken mit zweiten Laserpulsen erfolgt. Dies kann sinnvoll sein, weil sich unmittelbar nach der Einwirkung von Laserpulsen zur Beseitigung von Oberflächenschichten und Verunreinigungen noch abgelöstes Material aus der Beschichtung/Verunreinigung nahe am zu analysierenden Rohstoffstück befindet, was eine genaue Analyse beeinträchtigt und eine falsche Zusortierung zur Folge haben kann. Die Verdampfung von organischen Oberflächenbelägen, Ölen, Fetten und Lacken, Fremdmetallflitter, Veredelungsschichten aus Zink oder Zinn, Oxidschichten u. a. kann sich hier störend bemerkbar machen. Auf der anderen Seite kann, jedenfalls bei Verwendung lediglich eines Lasersystems, was aus Kostengründen wünschenswert ist, zwischen den Reinigungspulsen und den Analysepulsen keine zu lange Wartezeit eingebaut werden, da bei hohem Durchsatz in der Zwischenzeit weitere Rohstoffstücke das LIBS-System unanalysiert passieren würden. Die große Menge an zu analysierenden und sortierenden Rohstoffstücken, die mit hoher Geschwindigkeit auf einem Förderband bewegt werden, verlangt vielmehr die nahezu kontinuierliche Verwendung des Lasersystems.

Dem kann dadurch begegnet werden, dass eine Steuereinheit dafür sorgt, dass im Anschluss an die Reinigungspulse die Analysepulse auf ein anderes Rohstoffstück einwirken, das in Förderrichtung weiter fortgeschritten ist und bei dem eine Ablösung der Oberflächenbeschichtung mit Hilfe von Reinigungspulsen desselben Lasers kurz zuvor stattgefunden hat. An der Stelle, an der die Analysepulse auf das zweite Rohstoffstück einwirken, liegen zu diesem Zeitpunkt keine Oberflächenbeschichtungen oder Verunreinigungen mehr vor, da diese im vorgelagerten Schritt durch Reinigungspulse entfernt worden sind. Entsprechend ist für das zweite Rohstoffstück nun eine unverfremdete Analyse der Zusammensetzung möglich. Selbstverständlich muss die Steuereinheit dabei dafür sorgen, dass die Einwirkung der Analysepulse an derselben Stelle erfolgt wie die Einwirkung der Reinigungspulse. Dies lässt sich durch eine entsprechende Einrichtung der Steuereinheit erreichen, die insbesondere zum einen die Förderrichtung und Fördergeschwindigkeit der Rohstoffstücke und zum anderen die Lenkung der Laserpulse berücksichtigen und auswerten muss. Die Ausrichtung des Laserstrahls kann beispielsweise mit Hilfe von Umlenkspiegeln erfolgen.

Nach der LIBS-Analyse an dem zweiten Rohstoffstück wird der Laserstrahl erneut auf ein Rohstoffstück gesteuert, bei dem zunächst Reinigungspulse einwirken müssen, um an diesem Oberflächenbeschichtungen/Verunreinigungen zu entfernen. Anschließend erfolgt eine erneute Einwirkung von Analysepulsen entweder auf das erste Rohstoffstück oder ein anderes Rohstoffstück, auf das zuvor bereits Reinigungspulse eingewirkt haben. Der gesamte Vorgang, d. h. der Wechsel zwischen ersten und zweiten Laserpulsen wird somit getaktet ständig wiederholt.

Es sei allerdings erwähnt, dass sich der beschriebene Wechsel zwischen den einzelnen Rohstoffstücken in den meisten Fällen als nicht notwendig erweist, da durch die Schaffung einer entsprechend großen Fläche auf den Rohstoffstücken, die einer Analyse zugänglich ist, Verfälschungen durch Reste der abgelösten Oberflächenbeschichtungen/Verunreinigungen bereits weitgehend ausgeschlossen werden. Dies vereinfacht die Durchführung des Verfahrens.

Je nach Größe der Rohstoffstücke kann es sinnvoll sein, diese vor der Analyse der Zusammensetzung zu zerkleinern, um sie besser handhabbar zu machen. Damit eine sinnvolle Analyse der Zusammensetzung möglich ist, ist eine gewisse Mindestgröße erforderlich. Da die Analyse häufig mit Hilfe eines Lasers durchgeführt wird, der einen Brennfleck von ca. 50 bis 400 µm Durchmesser aufweist, sollte die Mindestgröße der einzelnen Rohstoffstücke nicht unter 2 mm liegen, wobei unter Größe die Maße in den zwei Dimensionen der Auflagefläche, beispielsweise auf einem Förderband, verstanden werden, d. h. das Rohstoffstück sollte mindestens 2 mm lang und breit sein. Vorteilhafterweise gilt die Größe für sämtliche Dimensionen einschließlich der Höhe. Zweckmäßig ist es, wenn die einzelnen Rohstoffstücke größer sind, beispielsweise eine Größe von mindestens 50 mm, bevorzugt mindestens 100 mm aufweisen. Auf der anderen Seite ist die Handhabung großflächiger, dünner Rohstoffstücke auch bei der Förderung schwierig, weshalb die Rohstoffstücke nach einem möglichen Zerkleinerungsschritt max. eine Größe von 2000 mm aufweisen sollten. Bevorzugt ist eine max. Größe von einigen 100 mm. Der Zerkleinerungsschritt kann ggf. auch nach dem Schritt der Reinigung bzw. der Ablösung von Oberflächenbelägen durchgeführt werden.

Vor der eigentlichen Analyse kann eine Vereinzelung der Rohstoffstücke notwendig sein, um die Rohstoffstücke analysieren zu können, ohne dass die Analyse einzelner Rohstoffstücke durch andere Rohstoffstücke behindert wird. Die Vereinzelung der Rohstoffstücke kann fördertechnisch in der Weise erfolgen, dass mehrere Module hintereinander angeordnet werden, die die Rohstoffstücke mit unterschiedlicher Geschwindigkeit bewegen. Beispielsweise kann ein erstes Modul die Rohstoffstücke mit relativ geringer Geschwindigkeit von z. B. 5 m/min bewegen. Von diesem Modul werden die Rohstoffstücke an ein weiteres Modul übergeben, das die Rohstoffstücke mit deutlich höherer Geschwindigkeit von z. B. 180 m/min bewegt. Auf diese Weise wird der Abstand zwischen den Rohstoffstücken gezielt vergrößert, d. h. es findet eine Vereinzelung statt, die die getrennte Analyse erlaubt. Bei Bedarf können zwischen den Modulen mit minimaler und maximaler Geschwindigkeit weitere untereinander geschwindigkeitsgeregelte Module angeordnet werden, durch die Rohstoffstücke mit mittleren Geschwindigkeiten bewegt werden. Eine typische Geschwindigkeitskaskade ist etwa: 5 m/min - 25 m/min - 100 m/min - 180 m/min. Falls erforderlich kann nach Vereinzelung der Rohstoffstücke die Geschwindigkeit wieder reduziert werden, um die Analyse durchführen zu können. Bei den Modulen kann es sich sowohl um Schwingförderer als auch um Förderbänder handeln, wobei typischerweise die Module mit niedrigerer Geschwindigkeit Schwingförderer und die Module mit höherer Geschwindigkeit Förderbänder sind. Insbesondere kann es sich bei dem Modul mit minimaler Geschwindigkeit um einen Schwingförderer (Schwingrinne oder Schüttelrutsche) und bei dem Modul mit maximaler Geschwindigkeit um ein Förderband handeln. Der Einsatz von Schwingförderern zu Beginn der Vereinzelung ist auch insofern hilfreich, als miteinander lose verbundene, z. B. leicht verhakte Rohstoffstücke auf diese Weise voneinander getrennt werden können. Ggf. kann es ausreichend sein, die Vereinzelung lediglich so weit durchzuführen, dass jeweils nur wenige Rohstoffstücke zusammen vorliegen, d. h. es ist nicht in jedem Fall erforderlich, eine Vereinzelung in dem Sinne vorzunehmen, dass sämtliche Rohstoffstücke vollkommen separiert sind.

Um die Stellen zu ermitteln, an denen eine spektroskopische Analyse der Zusammensetzung möglich ist, kann eine Bestimmung der Positionen der Rohstoffstücke sowie eine Bestimmung von räumlichen Informationen bezüglich der Rohstoffstücke durchgeführt werden. Als Ermittlung von räumlichen Informationen wird insbesondere die teilweise oder vollständige Ermittlung der Form der Rohstoffstücke verstanden. Die Position ist insbesondere die Position des Rohstoffstücks auf der Transporteinrichtung.

Um die Aussagekraft der durchgeführten Analyse zu erhöhen, können auch pro Rohstoffstück mehrere Stellen auf ihre Zusammensetzung analysiert werden, d. h. es muss an mehreren Stellen zunächst eine Einwirkung von Reinigungspulsen und anschließend eine Einwirkung von Analysepulsen erfolgen, um die jeweilige Zusammensetzung bestimmen zu können. Die Ergebnisse werden statistisch ausgewertet, anschließend wird in Abhängigkeit von der statistisch ermittelten Zusammensetzung die Sortierung durchgeführt.

Die Bestimmung der Position der Rohstoffstücke ist mit Hilfe eines 3D-Scanning-Schritts möglich, der auch dazu dienen kann, räumliche Informationen zu den Rohstoffstücken zu gewinnen. Es ist somit möglich, die Form der Rohstoffstücke zu erfassen. Die räumlichen Informationen zu den Rohstoffstücken, insbesondere die Form, wird automatisch daraufhin ausgewertet, an welchen Positionen eine spektroskopische Analyse problemlos möglich ist. Auf diese Weise kann die Analyse deutlich beschleunigt werden, da die Zahl nicht erfolgreicher Analyseschritte minimiert wird. 3D-Scanning-Technologien, zumeist mit Hilfe eines Lasers ausgeführt, sind dem Fachmann aus dem Stand der Technik hinlänglich bekannt und werden vielfältig eingesetzt, beispielsweise zur Bestimmung der Form von Zahnbögen, beim Rapid Prototyping etc.. Lediglich beispielhaft wird auf den Übersichtsartikel von W. R. Scott, G. Roth, ACM Computing Surveys, Vol. 35, 2003, S. 64 - 96 "View Planning for Automated Three-Dimensional Object Reconstruction and Inspection" verwiesen.

Anstatt Position und Form mit Hilfe von 3D-Scanning zu erfassen, sind auch andere Möglichkeiten denkbar. Beispielsweise kann die Position des Rohstoffstücks im Falle von Metallen durch elektromagnetische Induktion bestimmt werden. Hierzu können Spulen vorgesehen sein, beispielsweise unterhalb der Transporteinrichtung, die zusammen mit einem Kondensator einen Schwingkreis bilden, so dass die Position eines metallischen Rohstoffstücks elektronisch erfasst wird. Vorrichtungen, bei denen mit Hilfe von elektromagnetischer Induktion die Gegenwart eines metallischen Gegenstandes erfasst werden kann, sind dem Fachmann grundsätzlich bekannt.

Die Gewinnung von räumlichen Informationen zu den Rohstoffstücken ist auch dadurch möglich, dass über einen (gepulsten) Laser parallel zur Transportrichtung eine Höhenlinie jedes Rohstoffstücks über die Lichtlaufzeit ermittelt wird. Dies dient dazu, bei Rohstoffstücken, die in sich oder von Stück zu Stück eine starke Höhendifferenz aufweisen, den nachfolgenden Analysevorgang so vorzubereiten, dass ein lichtoptisches Verfahren sich zur eigentlichen Messung genügend präzise fokussieren kann. Die erhaltenen räumlichen Informationen werden dazu verwendet, die Stellen festzulegen, an denen eine Analyse der Zusammensetzung im Folgeschritt stattfindet. Durch die Ermittlung der Höhenlinie wird die Taktzeit der Messvorgänge erhöht und die Messgenauigkeit gesteigert. Zudem wird so der Einfluss etwaiger Relativbewegungen der Rohstoffstücke relativ zur Transporteinrichtung messtechnisch weitgehend eliminiert.

Der Sortiervorgang kann neben der Zusammensetzung auch die Masse der Rohstoffstücke berücksichtigen, um im Ergebnis nach Möglichkeit eine Zielfraktion zu erhalten, die insgesamt die gewünschte Zielzusammensetzung aufweist. Man spricht in diesem Zusammenhang auch vom Assortieren, wobei ein zusätzlicher Wägevorgang erforderlich sein kann. Ein solches Verfahren wird in der DE 10 2012 024 816 A1 offenbart; das erfindungsgemäße Verfahren kann im Rahmen des hier beschriebenen Assortierverfahrens eingesetzt werden. Das Sortieren erfolgt über ein automatisiertes Verfahren unter Verwendung eines Computers bzw. einer elektronischen Datenverarbeitungseinrichtung. Die Rohstoffstücke werden einzelnen Zielfraktionen zusortiert, wobei ggf. auch eine Restfraktion vorgesehen sein kann, in die nicht sinnvoll verwertbare Rohstoffstücke oder Werkstoffschädlinge enthaltende Rohstoffstücke eingebracht werden. Ebenfalls aussortiert werden sollten solche Rohstoffstücke, die sich als nicht analysierbar erweisen oder bei denen es sich um unzureichend aufbereitete oder aus zu vielen unterschiedlichen Stoffen zusammengesetzte Stücke wie etwa Verbundwerkstoffe, komplette Elektromotoren o. ä. handelt.

Die Sortierung kann mit Hilfe gängiger Verfahren mechanisch oder pneumatisch erfolgen, beispielsweise indem kontinuierlich über ein Förderband geförderte Metallschrotte je nach Bedarf geleitet und in unterschiedlichen bereitgestellten Behältnissen gesammelt werden. Die Zuführung zur Zielfraktion kann bspw. mit Hilfe von Luftstößen erfolgen, wie dies in der DE 100 29 951 A1 beschrieben wird. Möglich ist jedoch auch die Verwendung von mechanischen Klappen, Greifvorrichtungen o. ä..

Bei der Sortierung können auch geringe Mengen von Legierungsbestandteilen berücksichtigt werden, die vorzugsweise unterhalb von 800 ppm liegen können. Weiter bevorzugt werden auch Mengen unterhalb von 500 ppm, insbesondere unterhalb von 100 ppm, besonders bevorzugt unterhalb von 10 ppm bei der Analyse erfasst und für die Sortierung in Betracht gezogen.

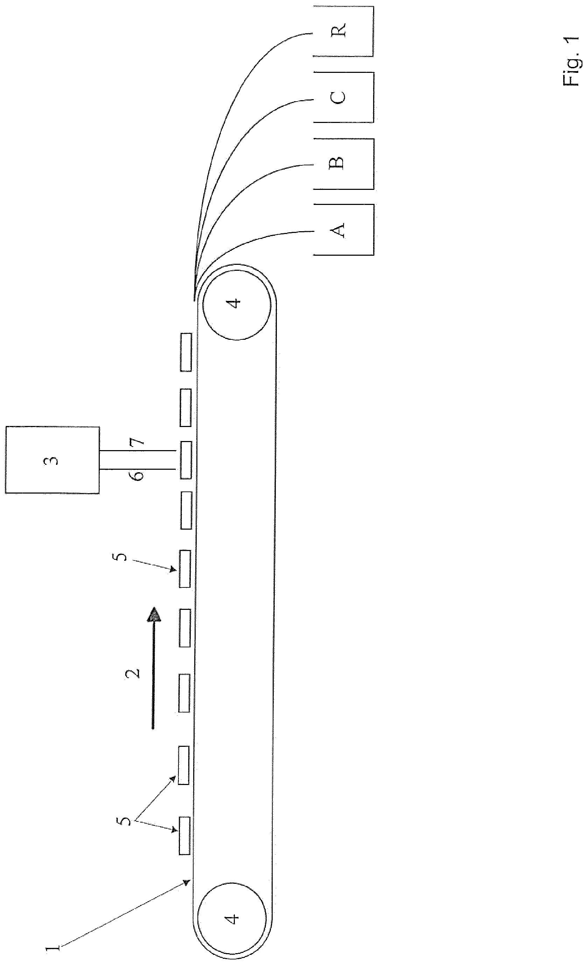

Neben dem erfindungsgemäßen Verfahren betrifft die Erfindung auch eine Vorrichtung zur Durchführung des erfindungsgemäßen Verfahrens. Diese Vorrichtung weist auf:
- einen Laser, der in der Lage ist, erste Laserpulse zur Ablösung von Oberflächenbeschichtungen und Verunreinigungen von Rohstoffstücken und zweite Laserpulse zur Überführung von freigelegtem Material der Rohstoffstücke in ein Plasma zu erzeugen,
- ein Spektrometer zur Analyse des vom Plasma emittierten Lichts,
- eine Transporteinrichtung zur Bewegung der Rohstoffstücke in Förderrichtung
- eine Steuereinheit, die die Pulsenergie, Pulsdauer und Pulsfrequenz des Lasers steuert und die ersten Laserpulse über eine Fläche der Rohstoffstücke bewegt und von Oberflächenbeschichtungen und/oder Verunreinigungen befreit, die größer ist als die von den zweiten Laserpulsen erfasste Fläche der Rohstoffstücke, wobei die ersten Laserpulse über die Rohstoffstücke wandern und wiederholt erste Laserpulse auf nah benachbarte Stellen der Rohstoffstücke einwirken, wobei die Steuereinheit den Fokusdurchmesser und den Fokuspunkt des Laserstrahls zwischen den ersten und zweiten Laserpulsen konstant hält, und
- eine Sortiereinheit, die die Rohstoffstücke in Abhängigkeit von der ermittelten Zusammensetzung automatisiert einer oder mehreren Zielfraktionen zusortiert.
Im Übrigen gelten für die erfindungsgemäße Vorrichtung sämtliche Ausführungen einschließlich möglicher Ausführungsformen der Erfindung entsprechend.
Die Erfindung wird anhand der beigefügten Figur 1 näher erläutert. Diese zeigt eine Transporteinrichtung 1, auf der eine Vielzahl von Rohstoffstücken 5 in Förderrichtung 2 bewegt wird. Zur Vereinfachung der Darstellung sind die Rohstoffstücke 5 hier verhältnismäßig regelmäßig auf der Transporteinrichtung 1 angeordnet, in der Praxis ist dies aber meist nicht der Fall. Bei der Transporteinrichtung 1 handelt es sich um ein Förderband, das durch Rollen 4 angetrieben wird. Am Ende des Förderbandes befindet sich eine Reihe von Sammelbehältern A, B, C, R, in denen die Rohstoffstücke 5, je nach Zusammensetzung, aufgefangen werden, um anschließend weiter verwendet werden zu können. In diesem Fall handelt es sich bei den Sammelbehältern A, B, C um Sammelbehälter zur Wiederverwertung der Rohstoffstücke 5, während es sich bei dem Sammelbehälter R um einen Reststoffsammelbehälter handelt, in dem solche Rohstoffstücke 5 aufgefangen werden, die einer weiteren Verwendung nicht zugänglich sind oder bei denen keine Analyse der Zusammensetzung möglich war.

Die Sortierung in die Sammelbehälter A, B, C, R erfolgt in Abhängigkeit von der ermittelten Zusammensetzung der Rohstoffstücke 5. Diese erfolgt mit Hilfe eines Lasers 3, der Laserpulse erzeugt, wobei zwischen Reinigungspulsen 6 und Analysepulsen 7 unterschieden werden muss. Auf ein bestimmtes Rohstoffstück 5 wirken jeweils zunächst Reinigungspulse 6 und anschließend Analysepulse 7 ein. Die Steuereinheit sorgt dafür, dass die Analysepulse auf die Stellen der Rohstoffstücke 5 gerichtet werden, an denen zuvor ein Materialabtrag durch Reinigungspulse 6 erfolgt ist. Hierfür berücksichtigt die Steuereinheit die Lage der Rohstoffstücke 5, die Geschwindigkeit der Transporteinrichtung 1 sowie die Lenkung der Reinigungspulse 6 und der Analysepulse 7.

Entsprechend ist eine aussagekräftige Bestimmung der Zusammensetzung der Rohstoffstücke 5 mit Hilfe der Analysepulse 7 möglich. Die vom Laser 3 ausgehenden Analysepulse 7 überführen Teile des Rohstoffstücks 5 in den Plasmazustand, die Analyse der Zusammensetzung erfolgt mit Hilfe eines hier nicht dargestellten Spektrometers, welches das durch das Plasma emittierte Licht einfängt. Es handelt sich somit um ein LIBS-Verfahren (laser induced breakdown spectroscopy); aus dem vom Spektrometer eingefangenen Licht lässt sich die jeweilige Zusammensetzung eines Rohstoffstücks 5 ermitteln. Eine hier ebenfalls nicht dargestellte Steuereinheit sorgt im Anschluss daran dafür, dass das jeweilige analysierte Rohstoffstück dem korrekten Sammelbehälter A, B, C, R zugeordnet wird.

## Patentansprüche

1. Verfahren zur Sortierung von wiederverwertbaren Rohstoffstücken (5), die durch eine Transporteinrichtung (1) fortlaufend in Förderrichtung (2) bewegt werden, wobei eine Analyse der chemischen Zusammensetzung der Rohstoffstücke (5) mit Hilfe der laserinduzierten Plasmaspektroskopie (LIBS) erfolgt und in Abhängigkeit von der ermittelten Zusammensetzung eine automatisierte Sortierung der Rohstoffstücke (5) durchgeführt wird, wobei die Rohstoffstücke (5)
- in einem ersten Schritt mit mehreren ersten Laserpulsen (6) beaufschlagt werden, um Oberflächenbeschichtungen und/oder Verunreinigungen von den Rohstoffstücken (5) zu entfernen, und
- in einem zweiten Schritt ein oder mehrere zweite Laserpulse (7) auf die Stellen der Rohstoffstücke (5) gerichtet werden, an denen die Oberflächenbeschichtungen und/oder Verunreinigungen entfernt worden sind, wobei freigelegtes Material der Rohstoffstücke (5) durch die zweiten Laserpulse (7) in ein Plasma überführt wird,
wobei für die ersten und zweiten Laserpulse (6, 7) derselbe Laser (3) verwendet wird,
**dadurch gekennzeichnet, dass** die ersten Laserpulse (6) über die Rohstoffstücke (5) wandern und wiederholt erste Laserpulse (6) auf nah benachbarte Stellen der Rohstoffstücke (5) einwirken und die Fläche der Rohstoffstücke (5), über die die ersten Laserpulse (6) bewegt und die von Oberflächenbeschichtungen und/oder Verunreinigungen befreit werden, größer ist als die von den zweiten Laserpulsen (7) erfasste Fläche der Rohstoffstücke (5), wobei der Fokusdurchmesser und der Fokuspunkt des Laserstrahls zwischen den ersten und zweiten Laserpulsen (6, 7) konstant gehalten werden.

2. Verfahren nach Anspruch 1, **dadurch gekennzeichnet, dass** die Fläche der Rohstoffstücke (5), die von Oberflächenbeschichtungen und/oder Verunreinigungen befreit wird, mindestens um den Fokusdurchmesser und Positionstoleranzen größer ist als die von den zweiten Laserpulsen (7) erfasste Fläche der Rohstoffstücke (5).

3. Verfahren nach Anspruch 1 oder 2, **dadurch gekennzeichnet, dass** die von Oberflächenbeschichtungen und/oder Verunreinigungen zu befreienden Flächen der Rohstoffstücke (5) in Abhängigkeit von der Beschaffenheit und Dicke der Oberflächenbeschichtungen/Verunreinigungen einfach oder mehrfach von den ersten Laserpulsen (6) erfasst werden.

4. Verfahren nach einem der Ansprüche 1 bis 3, **dadurch gekennzeichnet, dass** die ersten Laserpulse (6) entlang zumindest zwei Dimensionen über die von Oberflächenbeschichtungen und/oder Verunreinigungen zu befreienden Flächen der Rohstoffstücke (5) geführt werden.

5. Verfahren nach einem der Ansprüche 1 bis 4, **dadurch gekennzeichnet, dass** der Fokusdurchmesser des Laserstrahls zwischen 60 und 140 µm beträgt.

6. Verfahren nach einem der Ansprüche 1 bis 5, **dadurch gekennzeichnet, dass** die Pulslänge der ersten und zweiten Laserpulse (6, 7) 20 - 200 ns und bevorzugt 60 - 120 ns beträgt.

7. Verfahren nach einem der Ansprüche 1 bis 6, **dadurch gekennzeichnet, dass** das durch die zweiten Laserpulse (7) erzeugte Plasma ein thermisches Plasma ist.

8. Verfahren nach einem der Ansprüche 1 bis 7, **dadurch gekennzeichnet, dass** der Laser (3) ein Festkörperlaser ist.

9. Verfahren nach einem der Ansprüche 1 bis 8, **dadurch gekennzeichnet, dass** der Laser (3) ein Faserlaser ist.

10. Verfahren nach einem der Ansprüche 1 bis 9, **dadurch gekennzeichnet, dass** die Rohstoffstücke (5) mit einer Geschwindigkeit von > 0,1 m/s, bevorzugt > 2 m/s in Förderrichtung bewegt werden.

11. Verfahren nach einem der Ansprüche 1 bis 10, **dadurch gekennzeichnet, dass** die Rohstoffstücke (5) Stahlschrottstücke sind.

12. Verfahren nach Anspruch 11, **dadurch gekennzeichnet, dass** die Stahlschrottstücke verzinkte Stahlschrottstücke sind.

13. Verfahren nach Anspruch 11, **dadurch gekennzeichnet, dass** es sich bei den Rohstoffstücken (5) um Nicht-Eisen-Metallschrottstücke handelt.

14. Verfahren nach einem der Ansprüche 1 bis 13, **dadurch gekennzeichnet, dass** die ersten Laserpulse (6) auf Rohstoffstücke (5) gerichtet werden, die in Förderrichtung (2) weiter zurückliegen, und die zweiten Laserpulse (7) auf Rohstoffstücke (5) gerichtet werden, die in Förderrichtung (2) weiter fortgeschritten sind, wobei ein fortlaufender Wechsel zwischen der Beaufschlagung von in Förderrichtung (2) weiter zurückliegenden Rohstoffstücken (5) mit ersten Laserpulsen (6) und in Förderrichtung (2) weiter fortgeschrittenen Rohstoffstücken (5) mit zweiten Laserpulsen (7) erfolgt.

15. Vorrichtung zur Durchführung eines Verfahrens nach einem der Ansprüche 1 bis 14 mit
- einem Laser (3), der in der Lage ist, erste Laserpulse (6) zur Ablösung von Oberflächenbeschichtungen und Verunreinigungen von Rohstoffstücken (5) und zweite Laserpulse (7) zur Überführung von freigelegtem Material der Rohstoffstücke (5) in ein Plasma zu erzeugen,
- einem Spektrometer zur Analyse des vom Plasma emittierten Lichts,
- einer Transporteinrichtung (1) zur Bewegung der Rohstoffstücke (5) in Förderrichtung (2),
- einer Steuereinheit, die die Pulsenergie, Pulsdauer und Pulsfrequenz des Lasers (3) steuert und die ersten Laserpulse (6) über eine Fläche der Rohstoffstücke (5) bewegt und von Oberflächenbeschichtungen und/oder Verunreinigungen befreit, die größer ist als die von den zweiten Laserpulsen (7) erfasste Fläche der Rohstoffstücke (5), wobei die ersten Laserpulse (6) über die Rohstoffstücke (5) wandern und wiederholt auf nah benachbarte Stellen der Rohstoffstücke (5) einwirken, wobei die Steuereinheit den Fokusdurchmesser und den Fokuspunkt des Laserstrahls zwischen den ersten und zweiten Laserpulsen (6, 7) konstant hält,
und
- einer Sortiereinheit, die die Rohstoffstücke (5) in Abhängigkeit von der ermittelten Zusammensetzung automatisiert einer oder mehreren Zielfraktionen zusortiert.

## Claims

1. A process for sorting reusable raw-material pieces (5) which are moved continually in a conveying direction (2) by a transport means (1), where the chemical composition of the raw-material pieces (5) is analysed by laser-induced plasma spectroscopy (LIBS) and automated sorting of the raw-material pieces (5) is performed depending on the composition found, where the raw-material pieces (5)
- in a first step are subjected to a plurality of first laser pulses (6) in order to remove surface coatings and/or contaminants from the raw-material pieces (5), and
- in a second step, one or more second laser pulses (7) are directed at those locations of the raw-material pieces (5) from which the surface coatings and/or contaminants have been removed, with exposed material of the raw-material pieces (5) being converted by the second laser pulses (7) into a plasma,
where the same laser (3) is used for the first and second laser pulses (6, 7),
**characterized in**
**that** the first laser pulses (6) migrate over the raw-material pieces (5) and first laser pulses (6) repeatedly act on closely adjacent points of raw material pieces (5) and the area of the raw-material pieces (5), over which the first laser pulses (6) are moved and which is freed from surface coatings and/or from contaminants is greater than the area of the raw-material pieces (5) that is embraced by the second laser pulses (7), the focal diameter and the focal point of the laser beam being kept constant between the first and second laser pulses (6, 7).

2. The process according to claim 1, **characterized in that** the area of the raw-material pieces (5), which is freed from said surface coatings and/or from said contaminants, is greater by at least the focal diameter and positional tolerances than the area of the raw-material pieces (5) that is embraced by the second laser pulses (7).

3. The process according to claim 1 or 2, **characterized in that** the areas of the raw-material pieces (5) that are to be freed from said surface coatings and/or from said contaminants are embraced singly or multiply by the first laser pulses (6) depending on the nature and thickness of said surface coatings/contaminants.

4. The process according to anyone of claims 1 to 3, **characterized in that** the first laser pulses (6) are guided along at least two dimensions over the areas of the raw-material pieces (5) that are to be freed from said surface coatings and/or from said contaminants.

5. The process according to anyone of claims 1 to 4, **characterized in that** the focal diameter of the laser beam is between 60 and 140 µm.

6. The process according to anyone of claims 1 to 5, **characterized in that** the pulse length of the first and second laser pulses (6, 7) is 20-200 ns, preferably 60-120 ns.

7. The process according to anyone of claims 1 to 6, **characterized in that** the plasma generated by the second laser pulses (7) is a thermal plasma.

8. The process according to anyone of claims 1 to 7, **characterized in that** the laser (3) is a solid-state laser.

9. The process according to anyone of claims 1 to 9, **characterized in that** the laser (3) is a fiber laser.

10. The process according to anyone of claims 1 to 9, **characterized in that** the raw-material pieces (5) are moved with a speed of >0.1 m/s, preferably >0.2 m/s in the conveying direction.

11. The process according to anyone of claims 1 to 10, **characterized in that** the raw-material pieces (5) are steel-scrap pieces.

12. The process according to claim 11, **characterized in that** the steel-scrap pieces are galvanized steel-scrap pieces.

13. The process according to claim 11, **characterized in that** the raw-material pieces (5) are nonferrous-metal-scrap pieces.

14. The process according to anyone of claims 1 to 13, **characterized in that** the first laser pulses (6) are directed at raw-material pieces (5), which are further back in the conveying direction (2), and that the second laser pulses (7) are directed at raw-material pieces (5), which are further forward in the conveying direction (2), there being a continual alternation between the subjection of raw-material pieces (5) that are further back in the conveying direction (2) to first laser pulses (6) and of raw-material pieces (5) that are further forward in the conveying direction (2) to second laser pulses (7).

15. An apparatus for performing a process according to anyone of claims 1 to 14, having
- a laser (3) which is capable of generating first laser pulses (6) for detaching surface coatings and contaminants from raw-material pieces (5), and second laser pulses (7) for converting exposed material of the raw-material pieces (5) into a plasma,
- a spectrometer for analysing the light emitted by the plasma,
- transport means (1) for moving the raw-material pieces (5) in the conveying direction (2),
- a control unit which controls the pulse energy, pulse duration, and pulse frequency of the laser (3) and which moves the first laser pulses (6) over an area of the raw-material pieces (5), and frees said area from said surface coatings and/or from said contaminants, said area being greater than the area of the raw-material pieces (5) that is embraced by the second laser pulses (7), wherein the first laser pulses (6) migrate over the raw-material pieces (5) and repeatedly act on closely adjacent points of raw-material pieces (5), wherein the control unit keeps constant the focal diameter and the focal point of the laser beam between the first and second laser pulses (6, 7),
and
- a sorting unit which automatedly assigns the raw-material pieces (5) to one or more target fractions depending on the composition found.

## Revendications

1. Procédé de tri de morceaux de matières premières (5) recyclables qui sont déplacées par un dispositif de transport (1) en continu dans le sens de transport (2), dans lequel une analyse de la composition chimique des morceaux de matières premières (5) est effectuée à l'aide de la spectroscopie sur plasma (LIBS) induite par laser et en fonction de la composition déterminée un tri automatisé des morceaux de matières premières (5) est réalisé, dans lequel les morceaux de matières premières (5)
- sont sollicités dans une première étape avec plusieurs premières impulsions laser (6) afin de retirer des revêtements de surface et/ou des impuretés des morceaux de matières premières (5), et
- dans une seconde étape une ou plusieurs secondes impulsions laser (7) sont dirigées sur les endroits des morceaux de matières premières (5), sur lesquels les revêtements de surface et/ou les impuretés ont été retirées, dans lequel du matériau libéré des morceaux de matières plastiques (5) est transféré par les secondes impulsions laser (7) dans un plasma,
dans lequel pour les première et secondes impulsions laser (6, 7) le même laser (3) est utilisé,
**caractérisé en ce**
**que** les premières impulsions laser (6) migrent sur les morceaux de matières premières (5) et de manière répétée des premières impulsions laser (6) agissent sur des endroits très contigus des morceaux de matières premières (5) et la surface des morceaux de matières premières (5) sur laquelle les premières impulsions laser (6) sont déplacées et qui est libérée des revêtements de surface et/ou des impuretés, est plus grande que la surface détectée par les secondes impulsions laser (7) des morceaux de matières premières (5), dans lequel le diamètre de focalisation et le point focal du faisceau laser sont maintenus constants entre les premières et secondes impulsions laser (6, 7).

2. Procédé selon la revendication 1, **caractérisé en ce que** la surface des morceaux de matières premières (5) qui est libérée des revêtements de surface et/ou des impuretés, est plus grande d'au moins le diamètre de focalisation et des tolérances de position que la surface détectée par les secondes impulsions laser (7) des morceaux de matières premières (5).

3. Procédé selon la revendication 1 ou 2, **caractérisé en ce que** les surfaces à libérer des revêtements de surface et/ou des impuretés des morceaux de matières premières (5) sont détectées en fonction de la nature et de l'épaisseur des revêtements de surface/des impuretés simplement ou de manière multiple par les premières impulsions laser (6).

4. Procédé selon l'une quelconque des revendications 1 à 3, **caractérisé en ce que** les premières impulsions laser (6) sont guidées le long d'au moins deux dimensions sur les surfaces à libérer des revêtements de surface et/ou des impuretés des morceaux de matières premières (5).

5. Procédé selon l'une quelconque des revendications 1 à 4, **caractérisé en ce que** le diamètre de focalisation du faisceau laser est entre 60 et 140 µm.

6. Procédé selon l'une quelconque des revendications 1 à 5, **caractérisé en ce que** la longueur d'impulsion des première et seconde impulsions laser (6, 7) est entre 20 et 200 ns et de préférence 60 et 120 ns.

7. Procédé selon l'une quelconque des revendications 1 à 6, **caractérisé en ce que** le plasma généré par les secondes impulsions laser (7) est un plasma thermique.

8. Procédé selon l'une quelconque des revendications 1 à 7, **caractérisé en ce que** le laser (3) est un laser à corps solide.

9. Procédé selon l'une quelconque des revendications 1 à 8, **caractérisé en ce que** le laser (3) est un laser à fibre.

10. Procédé selon l'une quelconque des revendications 1 à 9, **caractérisé en ce que** les morceaux de matières premières (5) sont déplacés à une vitesse de > 0,1 m/s, de préférence > 2 m/s dans le sens de transport.

11. Procédé selon l'une quelconque des revendications 1 à 10, **caractérisé en ce que** les morceaux de matières premières (5) sont des morceaux de riblons d'acier.

12. Procédé selon la revendication 11, **caractérisé en ce que** les morceaux de riblons d'acier sont des morceaux de riblons d'acier galvanisés.

13. Procédé selon la revendication 11, **caractérisé en ce qu'**il s'agit pour les morceaux de matières premières (5) de morceaux de riblons métalliques non ferreux.

14. Procédé selon l'une quelconque des revendications 1 à 13, **caractérisé en ce que** les premières impulsions laser (6) sont dirigées sur des morceaux de matières premières (5) qui sont plus en retrait dans le sens de transport (2), et les secondes impulsions laser (7) sont dirigées sur des morceaux de matières premières (5) qui sont plus avancés dans le sens de transport (2), dans lequel un changement continu entre la sollicitation de morceaux de matières premières (5) plus en retrait dans le sens de transport (2) avec des premières impulsions laser (6) et de morceaux de matières premières (5) plus avancés dans le sens de transport (2) avec des secondes impulsions laser (7) est effectué.

15. Dispositif de réalisation d'un procédé selon l'une quelconque des revendications 1 à 14 avec
- un laser (3) qui est en mesure de générer des premières impulsions laser (6) pour le décollement de revêtements de surface et d'impuretés de morceaux de matières premières (5) et des secondes impulsions laser (7) pour le transfert de matériau libéré des morceaux de matières premières (5) dans un plasma,
- un spectromètre pour l'analyse de la lumière émise par le plasma,
- un dispositif de transport (1) pour le déplacement des morceaux de matières premières (5) dans un sens de transport (2),
- une unité de commande qui commande l'énergie d'impulsion, la durée d'impulsion et la fréquence d'impulsion du laser (3) et déplace les premières impulsions laser (6) sur une surface des morceaux de matières premières (5) et libère des revêtements de surface et/ou des impuretés, laquelle est plus grande que la surface détectée par les secondes impulsions laser (7) des morceaux de matières premières (5), dans lequel les premières impulsions laser (6) migrent sur les morceaux de matières premières (5) et de manière répétée agissent sur des endroits très contigus des morceaux de matières premières (5), dans lequel l'unité de commande maintient constant le diamètre de focalisation et le point focal du faisceau laser entre les première et seconde impulsions laser (6, 7),
et
- une unité de tri qui trie de manière automatisée les morceaux de matières premières (5) en fonction de la composition déterminée des une ou plusieurs fractions cible.
